# FASCICULE DE BREVET EUROPEEN

(11) **EP 0 629 655 B1**
(45) Date de publication et mention de la délivrance du brevet: **11.04.2001**
(21) Numéro de dépôt: 93440048.2
(22) Date de dépôt: 16.06.1993
(51) Int. Cl.: C08J 9/08, C08L 61/06

(54) **Procédé de réalisation de barrage ou de remplissage avec des résines phénoliques auto-moussantes, en particulier dans le domaine minier**
Verfahren zur Errichtung von Dämmen oder Verfahren zum Verfüllen mit selbstschäumenden Phenolharzen, insbesondere im Bergbau
Process for creating dams or process for filling with self-foaming phenolic resins, particularly in mining

(43) Date de publication de la demande: 21.12.1994
(73) Titulaire: A. WEBER, S.A., F-57520 Rouhling (FR)
(72) Inventeur: Weber, Adolphe, F-57520 Rouhling (FR)
(74) Mandataire: Nuss, Pierre

(56) Documents cités:
- EP-A- 0 338 983
- DD-A- 218 112
- DE-C- 3 911 477
- FR-A- 1 519 474
- FR-A- 2 484 529
- FR-A- 2 509 785
- FR-A- 2 667 352

## Description

La présente invention concerne le domaine de l'exploitation minière, en particulier la fermeture de galeries ou la consolidation de parois de mines, et a pour objet un procédé de réalisation de barrage ou de remplissage avec des résines phénoliques auto-moussantes, en particulier dans le domaine minier.

Dans le cadre de l'exploitation minière, et notamment de celle du charbon, les résines phénoliques, qui sont bien connues pour leurs propriétés de résistance au feu et de faible émission de fumée, sont d'une utilisation très courante.

A cet effet, FR-A-2 457 964 décrit différentes résines phénoliques catalysées avec un ou plusieurs acides forts et qui s'expansent sous l'effet de l'évaporation d'un liquide porogène, généralement constitué par un chlorofluorocarbone (C.F.C.) tel que le trichlorotrifluoroéthane. La réaction résine-catalyseur est une réaction de type exothermique, qui libère des calories provoquant un échauffement et la vaporisation du liquide porogène.

Ce procédé de moussage connu, de même que d'autres procédés existants, présentent, cependant, un certain nombre d'inconvénients. En effet, le moussage à froid, c'est-à-dire à une température comprise entre 1°C et 15°C, est impossible du fait que la chaleur de réaction est insuffisante pour obtenir le réchauffement du mélange, à savoir la résine et le catalyseur, jusqu'à obtention de la température d'évaporation du liquide porogène.

Il résulte de cette réaction un duroplaste mal catalysé, friable et pratiquement non expansé. En conclusion, pour l'obtention d'une mousse acceptable, il est nécessaire de préchauffer les matières premières à une température comprise entre 18°C et 20°C, ou alors de stocker lesdites matières premières dans des locaux tempérés.

En outre, les résines utilisées sont généralement mises en oeuvre au moyen de pompes doseuses, d'où le mélange résine-catalyseur sort, selon des procédés connus, sous forme liquide au niveau de la tête de mélange et ne s'épaissit qu'au bout de quelques minutes de réaction. Lorsque l'effet de masse est obtenu, le mélange chauffe, puis, dès que la température interne atteint une valeur comprise entre 30°C et 60°C, qui correspond au point d'ébullition du type de porogène choisi, s'expanse.

Ce procédé de remplissage de vides par moussage nécessite, cependant, toujours un coffrage étanche afin d'éviter la perte ou l'écoulement des produits utilisés, l'expansion et le figeage n'étant pas suffisamment rapides.

Enfin, les résines phénoliques expansées in-situ, utilisées actuellement, mettent toutes en oeuvre des agents porogènes à base de C.F.C. qui interviennent dans la destruction de la couche d'ozone et seront de ce fait à proscrire dans le cadre de toute nouvelle réalisation.

Des procédés de moussage aux carbonates généralement associés à des C.F.C. ont été essayés sans succès dans le passé.

Les formulations existant actuellement sont dites à trois composants, à savoir résine-carbonates-catalyseur.

D'autres formulations nécessitent un mélangeur continu résine-carbonate, afin d'éviter la sédimentation qui entraînerait un moussage disparate ou inexistant.

Ces procédés connus sont inutilisables dans le domaine minier, qui nécessite la mise en oeuvre d'un matériel simple et robuste, une structure de mousse régulière et en particulier des résols formulés dont la durée de vie dépasse plusieurs mois.

La présente invention a pour but de pallier ces inconvénients.

Elle a, en effet, pour objet un procédé de réalisation de barrage, de remplissage de cavités et d'étanchement par projection, avec des résines phénoliques auto-moussantes, en particulier dans le domaine minier, consistant à effectuer un mélange de deux composants, à savoir une résine de moussage comportant comme agent porogène du bicarbonate de sodium et un catalyseur contenant notamment des acides sulfoniques, caractérisé en ce qu'il met en oeuvre un mélange présentant la composition suivante :
- Composant résine :

| | |
|---|---|
| résol | jusqu'à 80 % |
| eau | 0 % à 10 % |
| bicarbonate de sodium | 5 % à 15 % |
| thixotropant (silice) | 0,5 % à 3 % |
| charges minérales | 0 % à 10 % |

- Composant catalyseur :

| | |
|---|---|
| acide phénolsulfonique | 40 % à 60 % |
| acide toluènesulfonique | 10 % à 20 % |
| acide benzène sulfonique | 0 % à 10 % |
| acide xylène sulfonique | 0 % à 10 % |
| acide sulfurique | 10 % à 25 % |
| eau | 10 % à 20 % |

afin de réaliser, même à basse température, une transformation quasi-instantanée en mousse avec un gonflage très rapide, sans nécessiter la mise en place d'un coffrage jointif et étanche, le bicarbonate de sodium présentant la répartition granulométrique suivante :

| | |
|---|---|
| particules de diamètre compris entre 0,0 mm et 0,040 mm | 40 % à 60 % |
| particules de diamètre compris entre 0,041 mm et 0,100 mm | 60 % à 40 % |

Le bicarbonate de sodium réagit chimiquement, au contact du catalyseur, avec les acides sulfoniques ou analogues, et dégage au cours de cette réaction du gaz carbonique CO₂.

Le gaz ainsi dégagé permet un gonflage quasi instantané du mélange résine-catalyseur et une transformation en mousse, quelle que soit la température des produits de base, la réaction chimique acide-bicarbonate étant indépendante de la température.

Une telle caractéristique est plus particulièrement intéressante dans le domaine minier, certaines zones froides, telles que les entrées d'air, les galeries peu profondes, ne permettant pas l'utilisation de mousse phénolique à base de C.F.C., du fait que la température du mélange résine-catalyseur ne peut pas atteindre la température d'évaporation des C.F.C.

En outre, le mélange ainsi obtenu permet la réalisation d'une mousse ininflammable et non sujette à post-combustion et le mélange moussant peut être projeté directement sur la roche, le charbon ou tout autre matériau, dont il assurera une isolation contre la chaleur, les gaz et l'air.

De plus, la réaction de la résine phénolique à base de bicarbonate avec le catalyseur acide s'effectuant de manière pratiquement instantanée, le mélange sortant de l'appareil de mise en oeuvre mousse et fige très rapidement, de sorte que la construction de coffrages étanches, qui sont généralement onéreux, peut être évitée, ainsi que la perte de produit par écoulement lors du remplissage de grandes cavités.

Un autre avantage essentiel de l'invention réside dans le fait que la mousse phénolique, qui est produite instantanément, présente un volume initial donné qui augmente progressivement jusqu'à neutralisation complète du carbonate. Cette propriété, qui consiste en un développement d'une seconde poussée, est très importante dans le domaine minier. En effet, le moussage instantané remplit partiellement le vide, tandis que la seconde poussée assurera le remplissage intégral du vide et la mise en pression, ce qui provoque l'étanchéité parfaite au gaz.

Le mélange moussant pour la mise en oeuvre de ce procédé est avantageusement un bi-composant, dont les parties ont une durée de vie supérieure à plusieurs mois, et est constitué par un composant résine comportant un résol, de l'eau, du bicarbonate de sodium, un thixotropant et des charges minérales et par un composant catalyseur comportant de l'acide phénolsulfonique, de l'acide toluènesulfonique, de l'acide benzène sulfonique, de l'acide xylène sulfonique, de l'acide sulfurique et de l'eau.

Afin de favoriser une expansion très rapide du mélange moussant, le bicarbonate de sodium présente avantageusement la répartition granulométrique suivante :

| | |
|---|---|
| particules de diamètre compris entre 0,0 mm et 0,040 mm | 40 % à 60 % |
| particules de diamètre compris entre 0,041 et 0,100 | 60 % à 40 % |

A titre d'exemple, le mélange moussant à deux composants présente la composition préférentielle suivante :
- Composant résine :

| | |
|---|---|
| résol | 60 % à 80 % |
| eau | 0 % à 10 % |
| bicarbonate de sodium | 5 % à 15 % |
| thixotropant (silice) | 0,5 % à 3 % |
| charges minérales | 0 % à 10 % |

- Composant catalyseur :

| | |
|---|---|
| acide phénolsulfonique | 40 % à 60 % |
| acide toluènesulfonique | 10 % à 20 % |
| acide benzène sulfonique | 0 % à 10 % |
| acide xylène sulfonique | 0 % à 10 % |
| acide sulfurique | 10 % à 25 % |
| eau | 10 % à 20 % |

Grâce à l'invention, il est possible de réaliser des barrages ou des remplissages au moyen de résines phénoliques auto-moussantes à expansion très rapide et ne contenant pas de C.F.C., en particulier dans le domaine minier.

En outre, le procédé conforme à l'invention peut être mis en oeuvre même à des températures relativement basses, notamment proches de 2°C, et sans nécessiter de moyen de coffrage jointif.

Enfin, le procédé conforme à l'invention peut être mis en oeuvre au moyen de coffrages sommaires, c'est-à-dire dont l'étanchéité peut être relative, ces coffrages pouvant être réalisés au moyen de planches grossières non jointives, éventuellement avec recouvrement au moyen d'une toile non étanche, le suintement de la mousse en expansion à travers les parties non jointives étant limité à une très faible part, du fait de l'expansion très rapide.

## Revendications

1. Procédé de réalisation de barrage, de remplissage de cavités et d'étanchement par projection, avec des résines phénoliques auto-moussantes, en particulier dans le domaine minier, consistant à effectuer un mélange de deux composants, à savoir une résine de moussage comportant comme agent porogène du bicarbonate de sodium et un catalyseur contenant notamment des acides sulfoniques, caractérisé en ce qu'il met en oeuvre un mélange présentant la composition suivante :
- Composant résine :
| | |
|---|---|
| résol | jusqu'à 80 % |
| eau | 0 % à 10 % |
| bicarbonate de sodium | 5 % à 15 % |
| thixotropant (silice) | 0,5 % à 3 % |
| charges minérales | 0 % à 10 % |
- Composant catalyseur :
| | |
|---|---|
| acide phénolsulfonique | 40 % à 60 % |
| acide toluènesulfonique | 10 % à 20 % |
| acide benzène sulfonique | 0 % à 10 % |
| acide xylène sulfonique | 0 % à 10 % |
| acide sulfurique | 10 % à 25 % |
| eau | 10 % à 20 % |
afin de réaliser, même à basse température, une transformation quasi-instantanée en mousse avec un gonflage très rapide, sans nécessiter la mise en place d'un coffrage jointif et étanche, le bicarbonate de sodium présentant la répartition granulométrique suivante :
| | |
|---|---|
| particules de diamètre compris entre 0,0 mm et 0,040 mm | 40 % à 60 % |
| particules de diamètre compris entre 0,041 mm et 0,100 mm | 60 % à 40 % |

2. Mélange moussant à deux composants pour la mise en oeuvre du procédé suivant la revendication 1, caractérisé en ce qu'il est un bi-composant, dont les parties ont une durée de vie supérieure à plusieurs mois, et est constitué par un composant résine comportant un résol, de l'eau, du bicarbonate de sodium, un thixotropant et des charges minérales et par un composant catalyseur comportant de l'acide phénolsulfonique, de l'acide toluènesulfonique, de l'acide benzène sulfonique, de l'acide xylène sulfonique, de l'acide sulfurique et de l'eau.

## Patentansprüche

1. Verfahren zur Herstellung von Sperren, Auffüllungen von Hohlräumen und von Abdichtungen durch Spritzen mit selbstschäumenden Phenolharzen, insbesondere für den Bereich des Bergbaus, durch Verwendung einer Mischung von 2 Komponenten, insbesondere einem Schaumharz, das als Treibmittel Natriumbicarbonat enthält, sowie einem Katalysator, der insbesondere Sulphonsäuren enthält. dadurch gekennzeichnet,
dass eine Mischung folgender Zusammensetzungen benutzt wird:
- Harzkomponenten:
| | |
|---|---|
| Resol | bis zu 80 % |
| Wasser | 0 % bis 10 % |
| Natriumbikarbonat | 5 % bis 15 % |
| Thixotropiermittel (Kieselerde) | 0,5 % bis 3 % |
| mineralische Füllstoffe | 0 % bis 10 % |
- Katalysatorkomponenten:
| | |
|---|---|
| Phenolsulfonsäure | 0 % bis 60 % |
| Toluensulfonsäure | 10 % bis 20 % |
| Benzensulfonsäure | 0 % bis 10 % |
| Xylensulfonsäure | 0 % bis 10 % |
| Schwefelsäure | 10 % bis 25 % |
| Wasser | 10 % bis 20 % |
um selbst bei niedrigen Temperaturen eine fast sofortige Umwandlung in Schaum mit einem sehr schnellen Aufblähen zu realisieren, ohne die Notwendigkeit, eine Verbindungs- oder Abdichtschalung anzubringen, wobei das Natriumbicarbonat die folgende Korngrößenverteilung aufweist:
| | |
|---|---|
| Teilchen, deren Durchmesser zwischen 0,0 mm und 0,040 mm liegt, | 40 % bis 60 % |
| Teilchen deren Durchmesser zwischen 0,041 mm und 0,100 mm liegt | 60 % bis 40 % |

2. Schäumende Mischung aus zwei Komponenten zur Benutzung bei dem Verfahren gemäß Anspruch 1,
dadurch gekennzeichnet,
dass sie aus zwei Komponenten besteht, deren Teile eine Lebensdauer von mehr als einigen Monaten haben und die gebildet werden durch eine Harzkomponente, die ein Resol, Wasser, Natriumbicarbonat, ein Thixotropiermittel und mineralische Füllstoffe enthält, und durch eine Katalysatorkomponente, die Phenolsulfonsäure, Toluensulfonsäure, Benzensulfonsäure, Xylensulfonsäure, Schwefelsäure und Wasser enthält.

## Claims

1. Process for producing barriers, for filling cavities and for sealing,by spraying, with self-foaming phenolic resins, in particular in the mining field, involving mixing two components, namely a foaming resin comprising sodium bicarbonate as blowing agent and a catalyst containing, in particular, sulphonic acids, characterised in that it employs a mixture having the following composition:
- resin component:
| | |
|---|---|
| resol | up to 80% |
| water | 0% to 10% |
| sodium bicarbonate | 5% to 15% |
| thixotropic agent (silica) | 0.5% to 3% |
| mineral fillers | 0% to 10% |
- catalyst component:
| | |
|---|---|
| phenolsuphonic acid | 40% to 60% |
| toluenesulphonic acid | 10% to 20% |
| benzenesulphonic acid | 0% to 10% |
| xylenesulphonic acid | 0% to 10% |
| sulphuric acid | 10% to 25% |
| water | 10% to 20% |
in order to bring about almost instantaneous transformation into foam even at low temperature with very rapid swelling without necessitating the positioning of contiguous sealed formwork, the sodium bicarbonate having the following grain-size distribution:
| | |
|---|---|
| particles with a diameter of between 0.0 mm and 0.40 mm | 40% to 60% |
| | |
| particles with a diameter of between 0.041 mm and 0.100 mm | 60% to 40%. |

2. Foaming mixture containing two components for carrying out the process according to claim 1, characterised in that it is a bi-component of which the portions have a shelf life greater than several months and it consists of a resin component comprising a resol, water, sodium bicarbonate, a thixotropic agent and mineral fillers and of a catalyst component comprising phenolsulphonic acid, toluenesulphonic acid, benzenesulphonic acid, xylenesulphonic acid, sulphuric acid and water.
